# EUROPEAN PATENT APPLICATION

(11) **EP 1 976 215 A1**
(43) Date of publication of application: **01.10.2008**
(21) Application number: 06817906.8
(22) Date of filing: 27.11.2006
(51) Int. Cl.: H04L 29/06

(54) **A METHOD, SYSTEM AND APPLICATION OF IMPLEMENTING AN IDENTIFICATION OF A SERVICE BASED ON AN ADDRESS**

(30) Priority: 25.01.2006 CN 200610002756
(71) Applicant: Huawei Technologies Co., Ltd., Longgang District Shenzhen 518129 (CN)
(72) Inventor: LI, Yan, Guangdong 518129 (CN); MA, Qifeng, Guangdong 518129 (CN); SHI, Xiaomin, Guangdong 518129 (CN); XU, Wenhua, Guangdong 518129 (CN)
(74) Representative: Hengelhaupt, Jürgen
(86) International application number: PCT/CN2006/003184
(87) International publication number: WO 2007/085167

(57) **Abstract**

The invention discloses a method, system and application for address-based service identification, including: obtaining service information and service feature list information, wherein the service information includes at least an SP ID and a service ID; generating address fields complying with the address specifications according to the service information and the service feature list information; and combining the address fields of the same service into an address of the service. The invention also discloses a service addressing system, including: a service provisioning module, an addressing module and an address generating module. When applied to service subscription and service routing, the invention may generate address information of service subscription according to the service information in the service subscription request of a user, and send all service address lists complying with this address information of service subscription to the user, which facilitates the user in querying the desired service information and makes it easier to manage and use various services.

## Description

This application claims a priority from the Chinese Patent Application No. 200610002756. 5, filed with the Chinese Patent Office on January 25, 2006 and entitled "Method, System and Application for Address-Based Service Identification", the contents of which are incorporated herein by reference in their entirety.

### Field of the Invention

The present invention relates to the network information technologies, and in particular, to a method, system and application for service addressing.

### Background of the Invention

With the development of network and communication technologies, the scale and the user quantity of the Internet and telecom networks are increasing rapidly, and more and more types of services emerge on the Internet and telecom networks. To meet different service requirements of users, various services must be managed effectively, and the service addresses must be unified. A service address is a logical symbol for identifying a service, primarily adapted to locate and route the service.

Currently in a telecom network, a service is generally represented by a serial number. For example, to subscribe to a service through a mobile station, a user needs to send an xx short message to yyyyyy, where yyyyyy is a service address. This addressing mode is unable to indicate the features of the service effectively, and makes it inconvenient to manage and apply multitudinous services if the services are diversified.

On the prior Internet, if a user wants to access a website of a certain domain name, the user generally has to send a domain name resolution request to the domain name server (DNS). After the domain name is resolved successfully, the DNS returns the IP address of this domain name to the user, and routes the user to the corresponding server on the Internet. This routing mode does not enable a service provider (SP) to have the access control right over the services provided by the SP.

### Summary of the Invention

The present invention provides a method, system and application for address-based service identification, including a service subscription method and system, and a service routing method; the invention overcomes the defect in the prior art, that is, the service addressing mode is unable to indicate the service features effectively, addresses the services automatically and consistently and facilitates service management.

A method for address-based service identification provided in an embodiment of the invention includes:
obtaining service information and service feature list information, where the service information includes at least an SP ID and a service ID;
generating all the address fields complying with the address specifications according to the service information and service feature list information; and
combining the address fields of the same service into an address of the service.

Preferably, the method further includes:
dividing a service network into multiple service subnets, including at least an SP service subnet and a specific service subnet; and
determining the service address fields according to the division of subnets.

Preferably, the method further includes:
creating an address ID database;
setting a unique master ID for each service and each service feature list in the service subnet on each level; and
storing master IDs of services and service feature lists as well as the corresponding alias(es) in the address ID database.

A system for address-based service identification provided in an embodiment of the invention includes:
a service provisioning module, adapted to provide service information;
an addressing module, adapted to generate address fields complying with the address specifications according to the service information; and
an address generating module, adapted to combine the address fields generated by the addressing module into a service address.

The addressing module includes:
an address ID database, adapted to store master IDs of all services and the corresponding alias(es);
a receiving unit, adapted to receive the addressing request sent by the service provisioning module, and extract the service information in the addressing request by category, where the extracted service information carries the serial number of the addressing request; and
an address field generating unit, adapted to generate address fields complying with the address specifications based on the service information extracted by the receiving unit and the address ID database.

The address field generating unit includes:
an SP processing subunit, adapted to convert the SP ID extracted by the receiving unit into an SP code field complying with the address specifications;
a service ID processing subunit, adapted to convert the service ID extracted by the receiving unit into a service code field complying with the address specifications; and
a service feature list processing subunit, adapted to convert the service feature information extracted by the receiving unit into a service feature code field complying with the address specifications.

Preferably, the system further includes:
a service feature provisioning module, adapted to provide service feature information to the service provisioning module or the addressing module.

A service subscription method provided in an embodiment of the invention includes:
obtaining service information in a user's service subscription request;
generating service subnet address fields complying with the address specifications according to the service information;
combining the address fields of the corresponding service subnets into address information of service subscription; and
sending all service address lists complying with the address information of service subscription to the user.

Preferably, the method further includes:
creating an address ID database, which stores master IDs of all services and the corresponding alias(es).

A service subscription system provided in an embodiment of the invention includes: a user equipment and user proxy;
a service pool, adapted to store various services and address information;
an addressing module, adapted to generate service address fields according to the user's service subscription request provided by the user proxy;
a service address extracting module, adapted to extract a service address list out of the service pool and return the list to the user proxy, where the list complies with the service address fields generated by the addressing module; and
a user, navigating to a specific desired service according to the service address list.

The addressing module includes:
an address ID database, adapted to store master IDs of all services and the corresponding alias(es);
a receiving unit, adapted to receive the addressing request sent by the service provisioning module, and extract the service information in the addressing request by category, where the extracted service information carries the serial number of the addressing request; and
an address field generating unit, adapted to generate address fields complying with the address specifications based on the service information extracted by the receiving unit and the address ID database.

A service routing method provided in another embodiment of the invention includes:
setting service address fields, including a service subnet address and a specific service address; and
routing the user service data to a service subnet according to the service subnet address in the service address fields in the service request message of a user when the user accesses the service address, and navigating the user to the desired service according to the specific service address.

A routing apparatus, on which service route information is set, includes:
a routing processing unit, adapted to route the user service data to a service subnet according to the set service route information and the service subnet address in the service request message of a user, and navigate the user to the desired service according to the specific service address in the request message, and
a routing proxy unit, configured with a mapping table of service addresses and bearer network layer addresses of various nodes, and adapted to obtain the service address and bearer network layer address of the next-hop node on a service route of this node; and
sending the service request message of a user to the bearer network layer address of the next-hop node and the destination service address in the request message through the bearer network layer of this node, and navigating the user to the desired service.

The foregoing technical schemes provided in the embodiments of the invention show that: the invention divides a service network into multiple subnets; determines the fields required for addressing according to the division of subnets; extracts the features of a service according to the pre-stored master ID of each SP and each service as well as the corresponding alias(es); converts the service features into the corresponding master ID, which serves as an address field of the service; and combines the address fields into an address of the service. Through this addressing mode, the embodiment of the invention generates unified addresses automatically according to the service information. In addition, the service addressing embodies the service features directly, which facilitates management and use of the service.

### Brief Description of the Drawings

Figure 1 shows the procedure of the service addressing method in an embodiment of the invention;
Figure 2 shows how a service network is divided into multiple subnets;
Figure 3 shows the composition of a service addressing system in the first embodiment of the invention;
Figure 4 is a service addressing time sequence chart of the system shown in Figure 3;
Figure 5 shows the composition of a service addressing system in the second embodiment of the invention;
Figure 6 is a service addressing time sequence chart of the system shown in Figure 5;
Figure 7 shows the composition of a service addressing system in the third embodiment of the invention;
Figure 8 is a service addressing time sequence chart of the system shown in Figure 7;
Figure 9 shows the procedure of the service subscription method in an embodiment of the invention;
Figure 10 is a schematic diagram of the service subscription system in an embodiment of the invention;
Figure 11 shows the procedure of service routing in an embodiment of the invention;
Figure 12 shows the procedure of service routing in an embodiment of the invention;
Figure 13 shows the procedure of routing to the next-hop node on the service route in an embodiment of the invention; and
Figure 14 shows a routing apparatus for implementing service routing in an embodiment of the invention.

### Detailed Description of the Invention

In the embodiments of the invention, a service network is divided into multiple subnets; fields required for addressing are determined according to the division of subnets; the address fields complying with the address specifications are generated according to the service information; and the address fields are combined into an address of the service. To generate the address fields complying with the address specifications according to the service information, an address identifier, ID, database is created for storing master IDs of information such as SP IDs, service IDs and IDs of service feature lists, and one or more aliases corresponding to the information, such as SP IDs, service IDs and service feature lists. In this way, through the information stored in the address ID database, the information about subnets on all levels and the service feature information of a service may be converted into a corresponding master ID, which serves as an address field of the service.

For automatic addressing of services, a service provisioning module and an addressing module are set in the service addressing system. The addressing module generates address fields complying with the address specifications according to the service information provided by the service provisioning module, and combines the generated address fields into a service address.

In the process of applying the service addressing method above mentioned to a service subscription, the method may generate address information of the service subscription according to the service information in the service subscription request of a user, and send all service address lists complying with this address information of the service subscription to the user. As a result, the user may select the desired service address conveniently, and may be routed to the service directly.

For better understanding of the invention, the invention is hereinafter described through some embodiments with reference to the accompanying drawings.

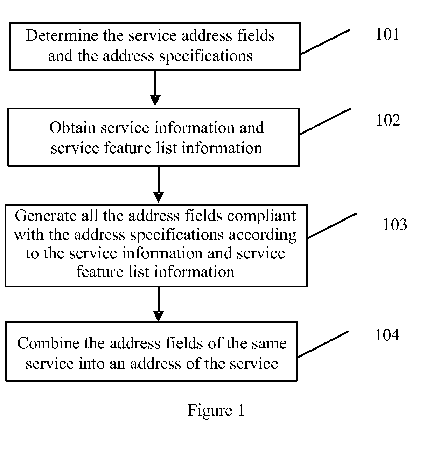

As shown in Figure 1, the procedure of the service addressing method in an embodiment of the invention includes:
Block 101: Determine the service address fields and the address specifications.

As known to those skilled in the art, service addressing is needed when an SP deploys a service. Generally, a service address may be divided into multiple fields, each being determined independently. All the fields are combined into an address of the service.

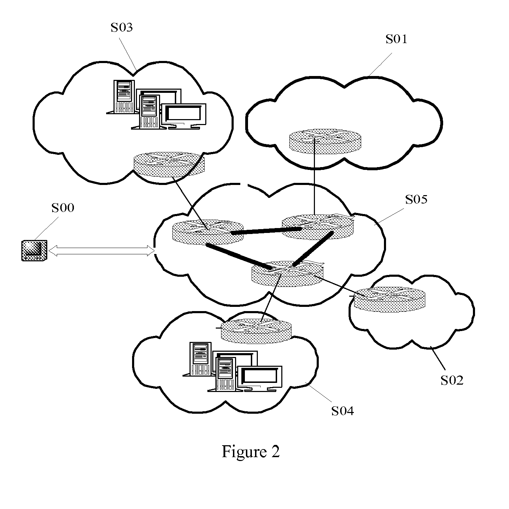

A service network may be divided into multiple subnets as required. Suppose the service network is a level-1 network, the service subnet of an SP is a level-2 network, and the service subnet of a specific service is a level-3 network, as shown in Figure 2:
In Figure 2, S00 is a client; S01 and S02 are service subnets of different SPs; S03 and S04 are service subnets of different specific services; S05 is a service core network adapted to interconnect the service subnets.

For example, an SP named "weathersp" provides a weather forecast service. The weather forecast may be provided through email, short message service (SMS), and multimedia message service (MMS). In this scenario, the network of the SP "weathersp" is an SP service subnet, the network of the subsidiary weather service is a weather service subnet, and the specific services provided through email, SMS and MMS correspond to three types of services.

According to the foregoing division of subnets, each service adopts the addressing scheme shown in Table 1.

**Table 1**

| | | |
|---|---|---|
| SP ID (SP) | Service ID (SID) | Service feature list (FeatureList) |

For a specific unique service, an address is divided into a prefix and a suffix, where the prefix contains the SP ID and the service ID, and the suffix contains the service feature list. The lengths of the three fields SP, SID and FeatureList may be fixed, and may be variable and separated by a special delimiter. A unique global ID is allocated to each SP; an ID unique within an SP subnet is allocated to each specific service provided by the SP; the service feature list contains basic features that may distinguish different services in a service subnet, for example, features provided by the enabler in the Open Mobile Alliance (OMA) and by the enabler in the Service Capability Feature (SCF) in Parlay.

As required in the application, two or three or more fields may be used for service addressing. The definition of each field is not limited to the foregoing network hierarchy, and the length of each field is configurable. After the fields required for addressing and the length of each field are determined, each service should be addressed according to such specifications to ensure that the service can be identified through this address.

Block 102: Obtain service information and service feature list information, where the service information includes at least an SP ID and a service ID.

If the service itself knows its service feature list information, the service feature list information may be directly used to generate a suffix of the service address; if the service itself does not know its service feature list information, the service feature list information may be generated by invoking the corresponding service feature information according to the service deployment and operation.

For example, if the "Shenzhen weather" service provided by the SP "weathersp" needs to be addressed, the SP ID and the service ID need to be provided in addition to the service feature list information. In this example, the SP ID is "weathersp" and the service ID is "Shenzhen weather". If the service itself knows its service feature list information, a service feature list may be generated directly. For example, if the service knows its service feature is "SMS", a service feature list containing "SMS" is generated directly. If the service itself does not know its service feature list information, the service feature list information need to be generated by invoking the corresponding service feature information according to the service deployment and operation. For example, for a specific "Shenzhen weather" service, inspection shows that it invokes an "SMS" provisioning unit (a specific feature provisioning unit, namely, SMS) to provide services, thus the generated service feature list may contain "SMS".

Block 103: Generate all the address fields complying with the address specifications according to the service information and the service feature list information.

To uniquely identify each service in the subnets on all levels, a unique global ID, namely, a master ID, must be set for different services in the subnets on all levels.

For example, for the division of the foregoing service subnets, it is necessary to uniquely determine each SP ID and each service ID. For this purpose, an address ID database may be created to store all legal SP IDs and service IDs as well as the service feature information. A unique ID corresponds to each SP, each service and each service feature. One ID may correspond to one or more aliases.

For example, the address ID database shown in Table 2 stores multiple SP IDs, service IDs and service feature IDs.

**Table 2**

| | | | |
|---|---|---|---|
| SP ID | Alias 1 | ... | Alias n |
| 333 | weathersp | | Weather SP |
| 555 | trafficsp | ... | Traffic SP |
| ... | ... | ... | ... |
| Service ID | Alias 1 | ... | Alias n |
| 4444 | Weather | ... | Weather forecast |
| 1111 | Road conditions | ... | Road conditions consulting |
| ... | ... | ... | ... |
| Service feature ID | Alias 1 | ... | Alias n |
| 5 | Location | ... | Location |
| | information | | |
| 3 | MMS | ... | Multimedia message |
| 8 | SMS | ... | Short message |
| ... | ... | ... | ... |

Nevertheless, the mode of storing information in an address ID database is not limited, and may be arranged as required.

When a new service is put into operation, add the master IDs of the services in the subnets on all levels of the service as well as the corresponding alias(es) into the address ID database; when an existing service is cancelled and the system does not need to reference this service information any more, delete the master IDs of the services in the subnets on all levels of this service as well as the corresponding alias(es) from the address ID database; when a new feature is added to a specific service, add the service feature information into the address ID database; when a specific service is cancelled and the system does not need to reference the feature information of this service any more, delete the feature information from the address ID database.

When generating address fields complying with the address specifications based on the information stored in the address ID database, extract the service information in the subnets on all levels of this service out of the obtained service information, and then use this service information to match the master ID of each service as well as the corresponding alias(es) stored in the address ID database. In this way, obtain master IDs and a service feature list of the service in the subnets on all levels. Use the master IDs and the service feature list of the service in the subnets on all levels as address fields of the service. For example, for the "weather" service provided by the SP "weathersp" through MMS, where the geographic location is "Shenzhen", obtain the address fields 333, 4444 and 35 by querying the address ID database.

If multiple services request addressing simultaneously, mark the same serial number for all address fields generated for the same service. This prevents generating a combination of address fields of different services at the time of generating service addresses, and prevents generating incorrect addresses.

Block 104: Combine the address fields of the same service into an address of the service.

As mentioned above, the lengths of the address fields may be the same or different, fixed or variable. For an address where the fields have a fixed length, when being combined, the fields may be separated by a delimiter or not separated. Through the length value of each field, one can know the feature of each field of the service; for an address where the fields have variable lengths, when being combined, the fields need to be separated through a delimiter so that they can be distinguished effectively. For example, according to the address fields obtained above, the address fields of the same service are separated by a delimiter, and the service address thus generated is 333. 4444.35.

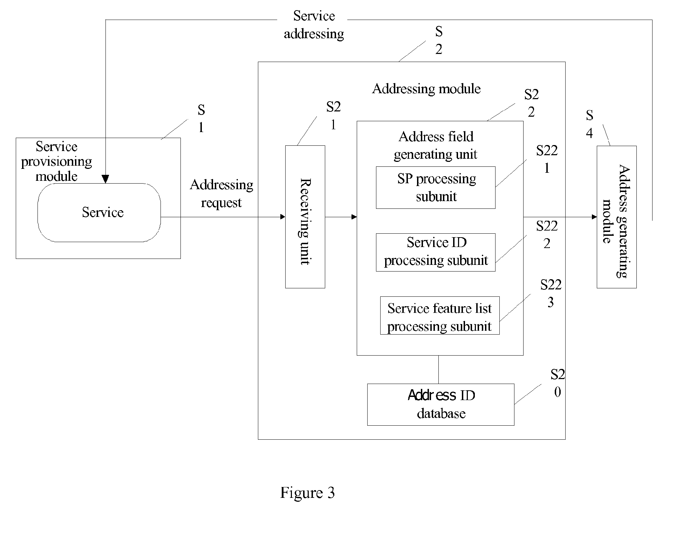

As shown in Figure 3, a service addressing system provided in an embodiment of the invention includes:
a service provisioning module S1, an addressing module S2 and an address generating module S4. The service provisioning module S1 is adapted to provide service information; the addressing module S2 is adapted to generate address fields complying with the address specifications according to the service information; and the address generating module S4 is adapted to combine all the address fields into a service address.

An addressing module S2 includes: an address ID database S20, a receiving unit S21 and an address field generating unit S22.

The address ID database S20 is adapted to store master IDs of all services and the corresponding alias(es).

After the service provisioning module sends an addressing request to the addressing module, the receiving unit extracts the service information in the addressing request by category, where the extracted service information carries the serial number of the addressing request; the receiving unit submits this information to the address field generating unit, which generates address fields complying with the address specifications based on the service information extracted by the receiving unit and the information stored in the address ID database. The address generating module combines the generated address fields into a service address in an agreed sequence.

According to the network division shown in Figure 2, an SP processing subunit S221, a service ID processing subunit S222 and a service feature list processing subunit (S223) may be set in the address field generating unit S22. The three subunits generate an SP ID field, a service ID field and a service feature list field respectively according to the corresponding information. Alternatively, one unit may convert the service information into the three fields consecutively.

Supposing three subunits generate the SP ID field, the service ID field and the service feature list field respectively according to the corresponding information, the addressing process of the system is as follows:
First, the service provisioning module sends to the addressing module an addressing request, which carries the SP ID, the service ID and the service feature list. After receiving the addressing request, the receiving unit in the addressing module extracts the service parameters by category, and sends the parameters to the corresponding processing units to obtain the specific address fields. The SP processing subunit S221, the service ID processing subunit S222 and the service feature list processing subunit S223 query respectively the address ID database respectively according to the received SP ID, service ID and service feature list, and obtain their respective information complying with the address specifications, namely, replace the alias ID with the master ID; if the corresponding records do not exist, the corresponding processing units trigger an exception. The address generating module generates a specific service address according to the received specific address fields, and returns the specific service address to the service provisioning module.

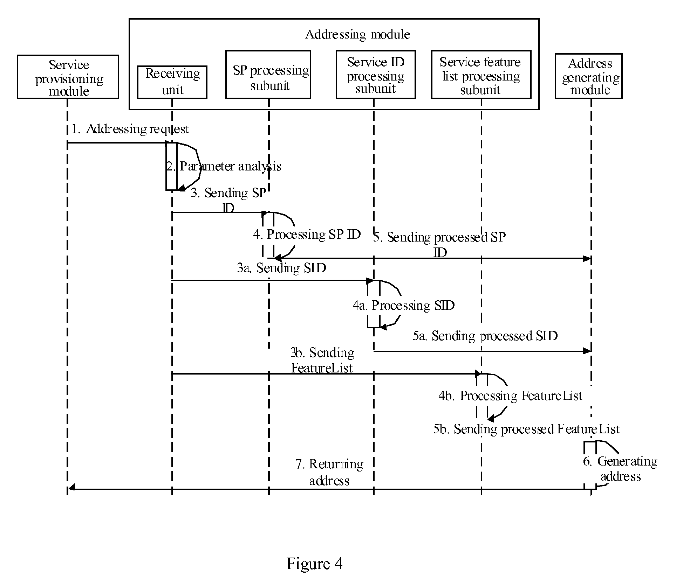

Figure 4 shows the specific time sequence:
1. Addressing request: The service provisioning module sends out an addressing request, which carries the information,including the SP ID, the service ID and the service feature list ,required for addressing:.
2. Parameter analysis: According to the received addressing request, the receiving unit analyzes the information in it, extracts the SP ID, the service ID and the service feature list in the request, and distributes them to the corresponding processing units. Meanwhile, the receiving unit provides a globally unique serial number for the addressing request. This serial number is appended to the SP ID, the service ID, and the service feature list so that the address generating module can find the corresponding address information.
3. Sending the SP ID: The receiving unit sends the SP ID to the SP processing subunit.
4. Processing the SP ID: According to the received SP ID, the SP processing subunit queries the address ID database and obtains the data information complying with the address specifications.
5. Sending the processed SP ID: The SP processing subunit sends the data information complying with the address specifications to the address generating module, where the data information carries the serial number of the corresponding addressing request.
3a. Sending the service ID (SID): The receiving unit sends the service ID to the service ID processing subunit.
4a. Processing the SID: According to the received service ID, the service ID processing subunit queries the address ID database and obtains the data information complying with the address specifications.
5a. Sending the processed SID: The service ID processing subunit sends the data information complying with the address specifications to the address generating module, where the data information carries the serial number of the corresponding addressing request.
3b. Sending the FeatureList (service feature list): The receiving unit sends the service feature information to the service feature list processing subunit.
4b. Processing the FeatureList: According to the received service feature information, the service feature list processing subunit queries the address ID database and obtains the data information complying with the address specifications.
5b. Sending the processed FeatureList: The service feature list processing subunit sends the data information complying with the address specifications to the address generating module, where the data information carries the serial number of the corresponding addressing request.
   The foregoing blocks 3, 4, 5, 3a, 4a, 5a, 3b, 4b and 5b are concurrent. They form a group of corresponding processes according to a unique serial number.
6. Generating the address: According to the received SP ID field, service ID field and service feature list field that have the same serial number and comply with the address specifications, the address generating module generates a service address.
7. Returning the address: The address generating module returns the generated service address to the service provisioning module.

If the service provisioning module itself does not know the features of a service, a service feature provisioning module may be added in the embodiment shown in Figure 3 to provide service feature parameters for the service provisioning module.

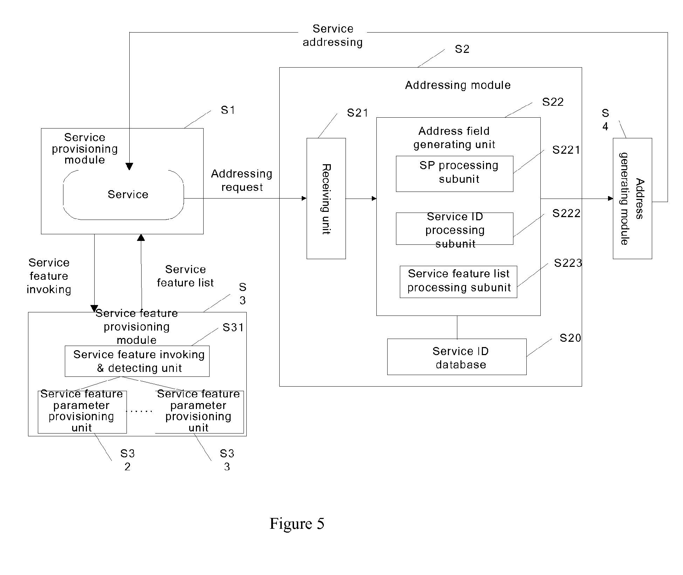

Figure 5 shows the composition of a service addressing system in the second embodiment of the invention:

The service feature provisioning module S3 is adapted to provide a service feature list for the service provisioning module. This module includes: a service feature invoking & detecting unit S31, and one or more service feature parameter provisioning units. The figure shows two service feature parameter provisioning units: S32 and S33. The service feature parameter provisioning units are adapted to provide service feature parameter information. The service feature invoking & detecting unit invokes the service feature parameter provisioning units as requested by the service provisioning module, obtains the corresponding service feature parameters from the invoked service feature parameter provisioning units and generates a service feature list and sends it to the service provisioning module.

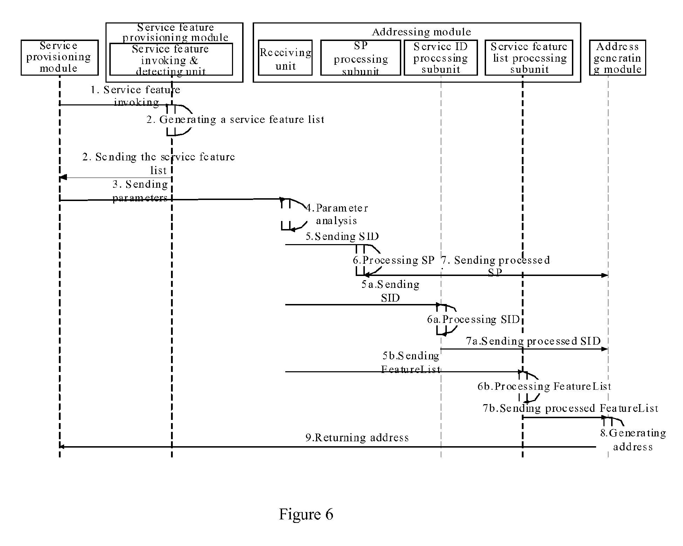

Figure 6 shows the specific time sequence:
1. Invoking service features: The service provisioning module sends a service feature invocation request to the service feature provisioning module.
2. Generating the service feature list: The service feature invoking & detecting unit detects the specifically invoked service features, and generates a service feature list.
2'. Returning the service feature list: The service feature invoking & detecting unit returns the generated service feature list to the service provisioning module.
3. Addressing request: The service provisioning module sends out an addressing request, which carries the information ,including the SP ID, the service ID and the service feature list, required for addressing,
4. Parameter analysis: According to the received addressing request, the receiving unit analyzes the information in it, extracts the SP ID, the service ID and the service feature list in the request, and distributes them to corresponding the processing modules. Meanwhile, the receiving unit provides a globally unique serial number for the addressing request. This serial number is appended to the SP ID, the service ID, and the service feature list so that the address generating module can find the corresponding address information.
5. Sending the SP ID: The receiving unit sends the SP ID to the SP processing subunit.
6. Processing the SP ID: According to the received SP ID, the SP processing subunit queries the address ID database and obtains the data information complying with the address specifications.
7. Sending the processed SP ID: The SP processing subunit sends the data information complying with the address specifications to the address generating module, where the data information carries the serial number of the corresponding addressing request.
5a. Sending the SID: The receiving unit sends the service ID to the service ID processing subunit.
6a. Processing the SID: According to the received service ID, the service ID processing subunit queries the address ID database and obtains the data information complying with the address specifications.
7a. Sending the processed SID: The service ID processing subunit sends the data information complying with the address specifications to the address generating module, where the data information carries the serial number of the corresponding addressing request.
5b. Sending the FeatureList: The receiving unit sends the service feature information to the service feature list processing subunit.
6b. Processing the FeatureList: According to the received service feature information, the service feature list processing subunit queries the address ID database and obtains the data information complying with the address specifications.
7b. Sending the processed FeatureList: The service feature list processing subunit sends the data information complying with the address specifications to the address generating module, where the data information carries the serial number of the corresponding addressing request.
The foregoing blocks 5, 6, 7, 5a, 6a, 7a, 5b, 6b and 7b are concurrent. They form a group of corresponding processes according to a unique serial number.
8. Generating the address: According to the received SP ID field, service ID field and service feature list field that have the same serial number and comply with the address specifications, the address generating module generates a service address.
9. Returning the address: The address generating module returns the generated service address to the service provisioning module.

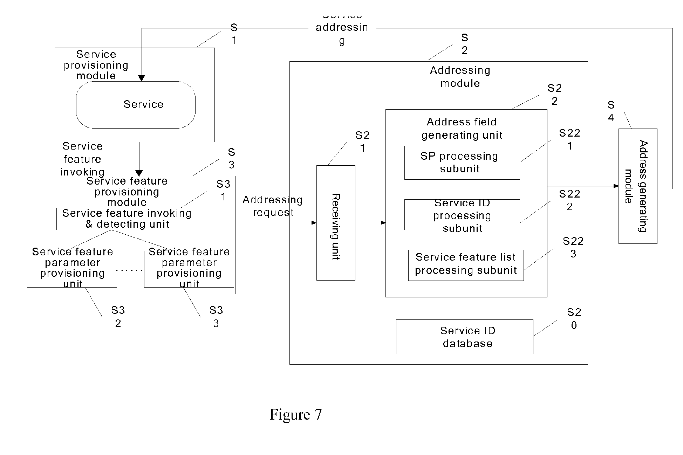

Figure 7 is a schematic diagram of a service addressing system in the third embodiment of the invention:

The service feature provisioning module S3 is adapted to provide a service feature list for the addressing module. This module includes: a service feature invoking & detecting unit S31, and one or more service feature parameter provisioning units. The figure shows two service feature parameter provisioning units: S32 and S33. The service feature parameter provisioning units are adapted to provide service feature parameter information. The service feature invoking & detecting unit obtains the corresponding service feature parameters from the service feature parameter provisioning units as requested by the service provisioning module, and generates a service feature list and sends it to the service addressing module.

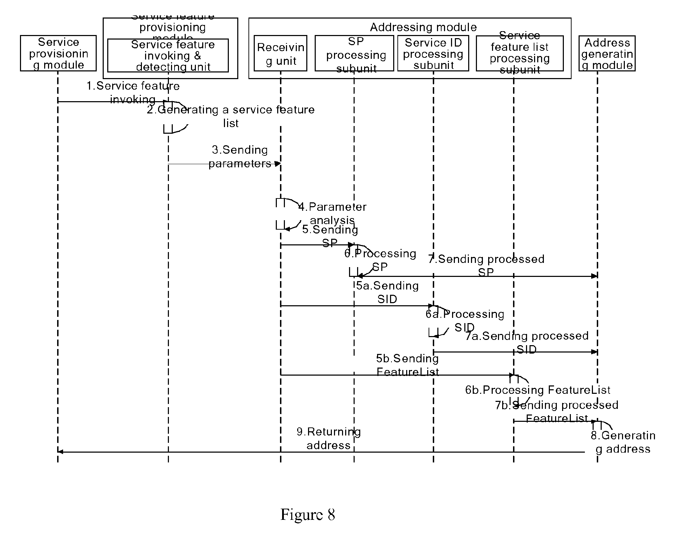

Figure 8 shows the specific time sequence:
1. Invoking service features: The service provisioning module sends to the service feature provisioning module a service feature invocation request, which carries the SP ID and the service ID.
2. Generating the service feature list: The service feature invoking & detecting unit detects the specifically invoked service features, and generates a service feature list.
3. Addressing request: The service feature provisioning module sends out an addressing request, which carries the information ,including the SP ID, the service ID and the service feature list,required for addressing.
4. Parameter analysis: According to the received addressing request, the receiving unit analyzes the information in it, extracts the SP ID, the service ID and the service feature list in the request, and distributes them to corresponding the processing modules. Meanwhile, the receiving unit provides a globally unique serial number for the addressing request. This serial number is appended to the SP ID, the service ID, and the service feature list so that the address generating module can find the corresponding address information.
5. Sending the SP ID: The receiving unit sends the SP ID to the SP processing subunit.
6. Processing the SP ID: According to the received SP ID, the SP processing subunit queries the address ID database and obtains the data information complying with the address specifications.
7. Sending the processed SP ID: The SP processing subunit sends the data information complying with the address specifications to the address generating module, where the data information carries the serial number of the corresponding addressing request.
5a. Sending the SID: The receiving unit sends the service ID to the service ID processing subunit.
6a. Processing SID: According to the received service ID, the service ID processing subunit queries the address ID database and obtains the data information complying with the address specifications.
7a. Sending the processed SID: The service ID processing subunit sends the data information complying with the address specifications to the address generating module, where the data information carries the serial number of the corresponding addressing request.
5b. Sending the FeatureList: The receiving unit sends the service feature information to the service feature list processing subunit.
6b. Processing the FeatureList: According to the received service feature information, the service feature list processing subunit queries the address ID database and obtains the data information complying with the address specifications.
7b. Sending the processed FeatureList: The service feature list processing subunit sends the data information complying with the address specifications to the address generating module, where the data information carries the serial number of the corresponding addressing request.
The foregoing blocks 5, 6, 7, 5a, 6a, 7a, 5b, 6b and 7b are concurrent. They form a group of corresponding processes according to a unique serial number.
8. Generating the address: According to the received SP ID field, service ID field and service feature list field that have the same serial number and comply with the address specifications, the address generating module generates a service address.
9. Returning the address: The address generating module returns the generated service address to the service provisioning module.

Through the service addressing method provided in an embodiment of the present invention, the service address may carry the feature information of the service, which reduces relevant steps in using the service and facilitates service query and management.

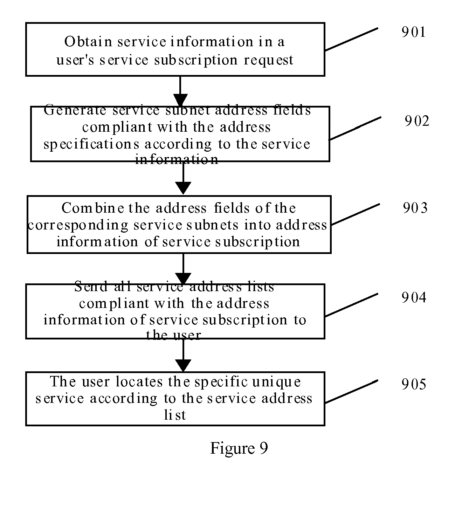

As shown in Figure 9, the procedure of the service subscription method in an embodiment of the invention includes:
Step 901: Obtain service information in a user's service subscription request;

When a user wants to use or query a service without knowing the address of the service, the user may send a service subscription request to the SP, indicating the expected service information such as the SP ID and the service ID.

Step 902: Generate address fields of the corresponding service subnets in compliance with the address specifications according to the service information.

This embodiment may also create an address ID database, which stores master IDs of all services and the corresponding alias(es). Extract service information on all levels for this service out of the service information provided by the user, and use such service information to match the master IDs of the services as well as the corresponding alias(es) stored in the address ID database. In this way, the master IDs on all levels of the service are obtained, and thus the address fields of the service are obtained.

If multiple services request addressing simultaneously, it is necessary to mark the same serial number for all address fields generated for the same service. This prevents generating a combination of address fields of different services at the time of generating service addresses, and prevents generating incorrect addresses.

Step 903: Combine the address fields of the corresponding service subnets into address information of the service subscription.

According to the predetermined address specifications, while being combined, the fields may be separated by a delimiter or not separated. The length value of each field reveals the features of the field of the service clearly.

Step 904: Send all service address lists complying with the address information of the service subscription to the user.

Step 905: The user navigates to the specific unique service according to the service address list.

The user may select a desired service from the service address list and subscribe to it.

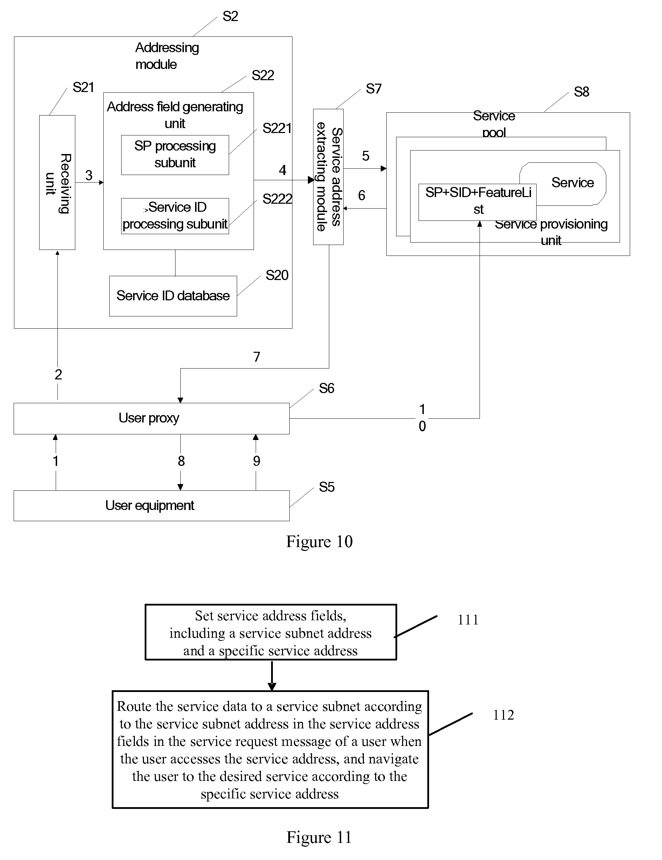

Figure 10 shows the composition of a service subscription system in an embodiment of the invention:

This system includes: a user equipment S5, a user proxy S6, an addressing module S2, a service address extracting module S7 and a service pool S8.

The service pool is adapted to store various services and their address information; the addressing module is adapted to generate service address fields according to the user's service subscription request provided by the user proxy; the service address extracting module is adapted to extract a service address list out of the service pool, where the list complies with the service address fields generated by the addressing module, and return the list to the user proxy.

The addressing module S2 includes: an address ID database S20, a receiving unit S21 and an address field generating unit S22.

The address ID database S20 is adapted to store master IDs of all services and the corresponding alias(es).

After the service provisioning module sends an addressing request to the addressing module, the receiving unit extracts the service information in the addressing request by category, where the extracted service information carries the serial number of the addressing request; the receiving unit submits this information to the address field generating unit, which generates address fields complying with the address specifications based on the service information extracted by the receiving unit and the information stored in the address ID database. The address generating module combines the generated address fields into a service address in an agreed sequence.

An SP processing subunit S221 and a service ID processing subunit S222 may be set in the address field generating unit S22. The two subunits generate an SP ID field and a service ID field respectively according to the corresponding information. Alternatively, one unit may convert the service information into the two fields consecutively.

When a user subscribes to a service, the user sends a service subscription request to the user proxy through a user equipment. The user proxy sends the service subscription request to the addressing module, which generates address fields. The service address extracting module extracts a service address list out of the service pool, where the list complies with the service address fields generated by the addressing module, and then returns the list to the user proxy. The user proxy sends the service address information to the user equipment so that the user may select the desired service from the service address list and subscribe to it.

The specific service subscription process is as follows:
1. The user equipment sends a service subscription request, which carries SP ID information and service ID information. Supposing the user subscribes to the "Shenzhen weather" service of the SP "weathersp", the request carries the two parameters.
2. The user proxy delivers the user request to the addressing module.
   According to the received request, the receiving unit analyzes the information in the request, extracts the SP ID information and service ID information out of the request by category, and distributes the information to the corresponding processing subunit. Meanwhile, the receiving unit provides a globally unique serial number for the request. This serial number is appended to the SP ID information and service ID information so that the service address extracting module can find the corresponding information.
3. The receiving unit extracts the SP ID information and adds a serial number to it, and then sends it to the SP processing subunit. According to the received SP ID information, the SP processing subunit queries the address ID database and obtains the data information complying with the address specifications. For example, " "weathersp"" is converted into a unique number "333".
   Meanwhile, the receiving unit extracts the service ID information and adds a serial number to it, and then sends it to the service ID processing subunit. According to the received service ID information, the service ID processing subunit queries the address ID database and obtains the data information complying with the address specifications. For example, "Shenzhen weather" is converted into a unique number "4444".
4. The SP processing subunit sends the data information complying with the address specifications to the service address extracting module, where the data information carries a serial number allocated by the receiving unit.
   Meanwhile, the service processing subunit sends the data information complying with the address specifications to the service address extracting module, where the data information carries a serial number allocated by the receiving unit.
   The service address extracting module handles the received SP information and the service ID information, and combines the information that has the same serial number.
5. The service address extracting module sends the combined service subscription request information to the service pool.
   According to the received request, the service pool extracts the services complying with the SP ID information and service ID information and generates a service list. For example, if the services that meet the requirements include "333. 4444. 15", "333. 4444. 35" and "333. 4444. 58", the three services form a service list.
   The conclusion here is based on these assumptions: The "location feature" (the service needs "location" support) is marked with "5", the "SMS feature" (the service needs "SMS" support) is marked with "8", the "MMS feature (the service needs "MMS" support) is marked with "3", and the "EMAIL feature" (the service needs "EMIAL" support) is marked with "1".
6. The service pool sends the service list to the service address extracting module.
7. The service address extracting module sends the service list to the user proxy.
   When necessary, the user proxy may filter the service list according to the received service list and the features supported by the user equipment as far as the user proxy knows. The user proxy needs to understand the service addressing and the service feature list in the addressing. Meanwhile, the user proxy knows the service features supported by the user equipment. If the features required by the service in the service list are not supported by the user equipment, the service will be handled in a special way, for example, deleted from the list or identified differently.
   For example, if the user proxy contains a "5 = 0" record indicating the user proxy forbids anyone to access its location information, all services in the service list will be filtered out. For example, if the user proxy contains a "3 = 0" record indicating the user equipment does not support MMS, all "333. 4444. 35" services in the service list will be filtered out.
8. The user proxy sends the filtered service list to the user equipment.
9. The user may select a desired service from the service list at discretion and subscribe to it.
10. The user proxy may route to a service directly according to the service address selected by the user, and subscribe to it.

Therefore, with the invention, a user may conveniently query the desired service, manage and use various services.

Based on the foregoing service addressing and service subscription modes, the present invention also provides a service routing method. To shield the lower-layer networks and separate the service network from the bearer network, a service router is provided at the service network layer. The service router implements service routing and addressing in the service network, and knows the next hop in the routing process by identifying the service address. According to an embodiment of the invention, there is a service router in every service subnet. The user can access the resources in a service subnet via the service router in the subnet.

As shown in Figure 11, the procedure of the service routing method in an embodiment of the invention includes:
Step 111: Set service address fields, including a service subnet address and a specific service address.

As mentioned above, the service address fields are determined according to the division of service subnets. For example, a service network may be divided into two levels of subnets: an SP service subnet and a specific service subnet. Thus a service address includes three fields: the SP ID, the service ID and the service feature list.
Step 112: Route the service data to a service subnet according to the service subnet address in the service address fields in the service request message of the user when the user accesses the service address, and navigate the user to the desired service according to the specific service address.

That is, when the user is in the service subnet corresponding to the service subnet address, the user can be navigated to the target service according to the specific service address; when the user is outside the service subnet corresponding to the service subnet address, the user is navigated to the target service in the following routing mode:
through the service core network, the user is routed to the SP service subnet, then to the service subnet, and finally to the specific service that the user wants to access.

In this way, the service can be located level by level during the routing. If the SP forbids the user to access the service, the user is unable to access the service.

In an embodiment of the invention, the service data is routed according to the concept of a service subnet. The service subnet refers to the foregoing SP subnet or the service subnet.

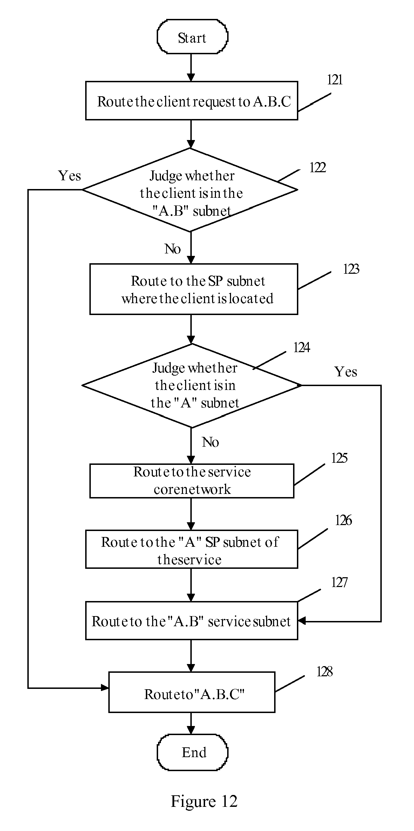

Supposing a client needs to access a service address "A. B. C", where "A" is the SP ID, "B" is the service ID and "C" is the service feature list, the routing flow is shown in Figure 12:
Step 121: The client requests routing to the service whose address is "A. B. C".
Step 112: This request is routed to the service router of the service subnet where the client is located. This service router judges whether the requesting client is in the "A. B" service subnet. If so, the flow goes to step 128; if not, the flow goes to step 123.
Step 123: If the requesting client is not in the "A. B" service subnet, the request is routed to the service router of the SP subnet where the client is located.
Step 124: The service router of the SP subnet where the client is located judges whether the requesting client is in the "A" SP subnet. If so, the flow goes to step 127; if not, the flow goes to step 125.
Step 125: If the requesting client is not in the "A" SP subnet, the request is routed to the service router of the service core network.
Step 126: The service router of the service core network routes the request to the service router of the "A" SP subnet.
Step 127: The service router of the "A" SP subnet routes the request to the service router of the "A. B" service subnet.
Step 128: The service router of the "A. B" service subnet routes the request of the client to the "A. B. C" service.

In an embodiment of the invention, the next-hop issue in a service route is solved through a service router. To map a next hop in the service network to a next hop in the bearer network, a proxy is required to implement address mapping.

To implement service routing, a service routing table needs to be stored in each service router. The service router searches for the next-hop service address according to this service routing table.

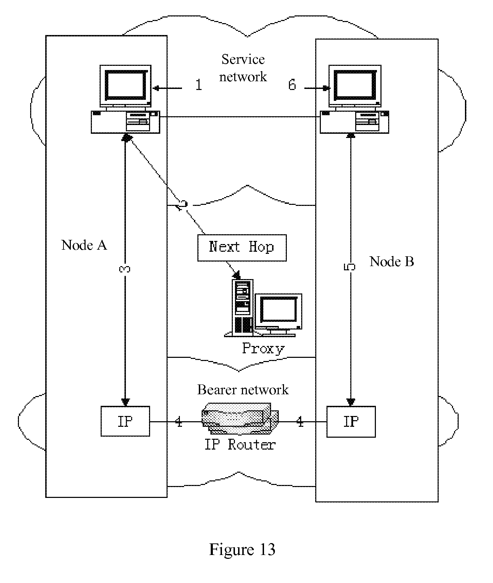

The process of routing to the next-hop node through a service router is described in detail below by reference to Figure 13.

The process of routing a node (node A) at the service layer to the next node (node B) of the service is as follows:
1. If node A is a non-service router, the service address of the next node (node B) is obtained according to the configuration in the subnet; if node A is a service router, the service address of the next node (node B) of the service route is obtained by querying the service routing table of this node, according to the destination service address carried in the message body of the service message.
The format of the service message sent by node A is shown in the Table 3, where the message body contains the destination service address.

**Table 3:**

| | |
|---|---|
| Service-layer address of node B | Message body |

2. Node A sends an address mapping request which carries the service address of node B to the proxy. The proxy queries its own database according to the received service address of node B, obtains the address of the bearer network layer of node B, and replies to node A through a message shown in Table 4.

**Table 4:**

| | | |
|---|---|---|
| Bearer-layer address of node B | Service-layer address of node B | Message body |

3. Node A sends the service message shown in Table 1 from the service layer of the node to the bearer network layer of the node.
4. According to the bearer network address corresponding to node B in the message, node A routes the user's service request message on the bearer network to the bearer layer node corresponding to node B.
5. At the bearer network layer, node B strips the bearer-layer address field and sends the message to the service layer of the node, if it is sure that the bearer-layer address carried in the message is the bearer network address of this node,.
6. After receiving the message sent by the bearer layer of the node at the service network layer, node B strips the service-layer address field and obtains the final message body if it is sure that the service-layer address in the message is the service-layer address of this node. In this way, the user can be navigated to the specific service specified by the message body.

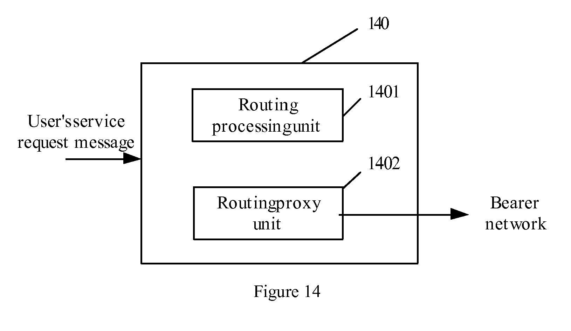

As shown in Figure 14, a routing apparatus 140, on which service route information is set, provided in an embodiment of the invention includes:
a routing processing unit 1401, adapted to route the user service data to a service subnet according to the set service route information and the service subnet address in the service request message of a user, and navigate the user to the specific service according to the specific service address in the request message.
a routing proxy unit 1402, configured with a mapping table of service addresses and bearer network layer addresses of various nodes, and adapted to obtain the service address and bearer network layer address of the next-hop node on a service route of this node; and
send the service request message of a user to the bearer network layer address of the next-hop node and the destination service address in the request message through the bearer network layer of this node, and navigating the user to the specific service.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for address-based service identification, comprising:
obtaining service information and service feature list information, wherein the service information includes at least an SP ID and a service ID;
generating all the address fields compliant with the address specifications according to the service information and service feature list information; and
combining the address fields of the same service into an address of the service.

2. The method of claim 1, further comprising:
dividing a service network into multiple service subnets, including at least an SP service subnet and a specific service subnet; and
determining the service address fields according to the division of subnets.

3. The method of claim 2, wherein the service address fields comprise: an SP ID field, a service ID field and a service feature list field, and each service feature list corresponds to a specific service.

4. The method of claim 3, further comprising:
creating an address ID database;
setting a unique master ID for each service and each service feature list in the service subnet on each level; and
storing master IDs of services and service feature lists as well as the corresponding alias(es) in the address ID database.

5. The method of claim 4, wherein the step of generating address fields compliant with the address specifications according to the service information and the service feature list information comprises:
extracting service information in subnets on all levels of the service out of the service information;
using the service information in the subnets on all levels and the service feature list information of the service to match the master IDs of the services and the corresponding alias(es) stored in the address ID database, and obtaining the master IDs of the services in subnets on all levels of the service and the master ID of the corresponding service feature list; and
using the obtained master IDs as address fields of the service.

6. The method of claim 4, further comprising:
marking the same serial number for all the address fields generated by the same service when multiple services request addressing simultaneously.

7. The method of claim 4, further comprising:
adding master IDs of services in the subnets on all level of the service and the corresponding alias(es) into the address ID database when a new service is put into operation;
deleting the master IDs of the services in the subnets on all levels of this service as well as the corresponding alias(es) from the address ID database when an existing service is cancelled and the system does not need to reference this service information any more;
adding the service information into the address ID database when a new service feature is added to a specific service; and
deleting the feature information from the address ID database when a specific service is cancelled and the system does not need to reference the feature information of this service any more.

8. The method of claim 1, wherein the step of combining all the address fields of the same service into an address of the service comprises:
separating the address fields of the same service through a delimiter and
combining them into an address of the service.

9. The method of claim 1, further comprising:
generating service feature list information according to the service deployment and operation when the service has no service feature list information.

10. A system for address-based service identification, comprising:
a service provisioning module, adapted to provide service information;
an addressing module, adapted to generate address fields compliant with the address specifications according to the service information; and
an address generating module, adapted to combine the address fields generated by the addressing module into a service address.

11. The system of claim 10, wherein the addressing module comprises:
an address ID database, adapted to store master IDs of all services and the corresponding alias(es);
a receiving unit, adapted to receive the addressing request sent by the service provisioning module, and extract the service information in the addressing request by category, wherein the extracted service information carries the serial number of the corresponding addressing request; and
an address field generating unit, adapted to generate address fields compliant with the address specifications based on the service information extracted by the receiving unit and the relevant ID information in the address ID database.

12. The system of claim 11, wherein the address field generating unit comprises:
an SP processing subunit, adapted to convert the SP ID extracted by the receiving unit into an SP code field compliant with the address specifications;
a service ID processing subunit, adapted to convert the service ID extracted by the receiving unit into a service code field compliant with the address specifications; and
a service feature list processing subunit, adapted to convert the service feature information extracted by the receiving unit into a service feature code field compliant with the address specifications.

13. The system of claim 10, further comprising:
a service feature provisioning module, adapted to provide service feature information for the service provisioning module or the addressing module.

14. The system of claim 13, wherein the service feature provisioning module comprises:
at least one service feature parameter provisioning unit, adapted to provide service feature parameter information; and
a service feature invoking & detecting unit, adapted to obtain the corresponding service feature parameters from the service feature parameter provisioning unit according to the request of the service provisioning module, and generate a service feature list and send the list to the service provisioning module or the addressing module.

15. A service subscription method, comprising:
obtaining service information in a user's service subscription request;
generating service subnet address fields compliant with the address specifications according to the service information;
combining the address fields of the corresponding service subnets into address information of service subscription; and
sending all service address lists compliant with the address information of service subscription to the user.

16. The method of claim 15, further comprising:
creating an address ID database, which stores master IDs of all services and the corresponding alias(es).

17. The method of claim 16, wherein the step of generating service subnet address fields compliant with the address specifications according to the service information comprises:
extracting service features on all levels of the service out of the service information;
using the service features to match the master IDs of the services and the corresponding alias(es) stored in the address ID database, and obtaining the master IDs on all levels of the service; and
using the master IDs on all levels of the service as the address fields of corresponding service subnets on all levels of the service.

18. A service subscription system, comprising a user proxy, and further comprising:
a service pool, adapted to store various services and address information;
an addressing module, adapted to generate service code fields according to a user's service subscription request provided by the user proxy;
a service address extracting module, adapted to extract a service address list out of the service pool, wherein the list is compliant with the service address fields generated by the addressing module; and return the list to the user proxy; and
a user, locating a specific desired service according to the service address list.

19. The system of claim 18, wherein the addressing module comprises:
an address ID database, adapted to store master IDs of all services and the corresponding alias(es);
a receiving unit, adapted to receive the addressing request sent by the service provisioning module, and extract the service information in the addressing request by category, wherein the extracted service information carries the serial number of the corresponding addressing request; and
an address field generating unit, adapted to generate address fields compliant with the address specifications based on the service information extracted by the receiving unit and the relevant ID information in the address ID database.

20. The system of claim 19, wherein the address field generating unit comprises:
an SP processing subunit, adapted to convert the SP ID extracted by the receiving unit into an SP code field compliant with the address specifications;
a service ID processing subunit, adapted to convert the service ID extracted by the receiving unit into a service code field compliant with the address specifications;

21. A service routing method, comprising:
setting service address fields, including a service subnet address and a specific service address; and
routing the service data to a service subnet according to the service subnet address in the service address fields in the service request message of a user when the user accesses the service address, and navigating the user to the desired service according to the specific service address.

22. The method of claim 21, wherein the service subnets comprise an SP service subnet and a specific service subnet.

23. The method of claim 22, wherein:
navigating the user to the specific desired service directly according to the specific service address when the user is in the service subnet corresponding to the service subnet address;
navigating the user to the specific desired service in the following routing modes when the user is outside the service subnet corresponding to the service subnet address:
routing to the SP service subnet through the service core network;
routing to the specific service subnet; and
locating the specific desired service.

24. The method of claim 23, wherein routing between nodes in the service subnet is implemented through a proxy, comprising:
configuring a mapping table of service addresses and bearer network layer addresses of various nodes on the proxy;
by this node, obtaining the service address of the next-hop node on the service route;
querying and obtaining the bearer network layer address corresponding to the service address of the next-hop node from the proxy;
sending the service request message of the user to the bearer network layer address of the next-hop node through the bearer network layer of this node;
obtaining the destination service address in the service request message of the user after the next-hop node receives this message;
go on routing the service request message of the user to the next-hop node in the foregoing mode if the destination service address is not a service address of the node; and
navigating the user to the specific desired service if the destination service address is a service address of the node.

25. The method of claim 24, wherein:
when the node is a service router, the node queries the service routing table of the node according to the destination service address in the service request message of the user, and obtains the service address of the next-hop node on the service route.
when the node is a non-service router, the node obtains the service address of the next-hop node on the service route according to the configuration in the subnet.

26. A routing apparatus, on which service route information is set, comprising:
a routing processing unit, adapted to route the user service data to a service subnet according to the set service route information and the service subnet address in the service request message of a user, and navigate the user to the desired service according to the specific service address in the request message.

27. The routing apparatus of claim 26, further comprising:
a routing proxy unit, configured with a mapping table of service addresses and
bearer network layer addresses, and adapted to obtain the service address and the bearer network layer address of the next-hop node on a service route of this node; and
sending the service request message of the user to a bearer network layer address of the next-hop node and the destination service address in the request message of the user through the bearer network layer of this node, and navigating the user to the desired service.
